# EUROPEAN PATENT APPLICATION

(11) **EP 2 206 754 A1**
(43) Date of publication of application: **14.07.2010**
(21) Application number: 08839474.7
(22) Date of filing: 16.10.2008
(51) Int. Cl.: C09D 201/00, C09D 5/16, C09D 7/12, C09D 143/04, C09D 183/04

(54) **RESIN COMPOSITION FOR COATING MATERIAL AND COATED ARTICLE COATED WITH THE RESIN COMPOSITION FOR COATING MATERIAL**

(30) Priority: 17.10.2007 JP 2007270405
(71) Applicant: Kaneka Corporation, Kita-ku Osaka-shi, Osaka 530-8288 (JP)
(72) Inventor: MATSUO, Youichi, Takasago-shi Hyogo 651-2137 (JP); NAMBU, Toshiro, Takasago-shi Hyogo 651-2137 (JP)
(74) Representative: Hart-Davis, Jason
(86) International application number: PCT/JP2008/068761
(87) International publication number: WO 2009/051182

(57) **Abstract**

The present invention aims to provide a composition having excellent stain resistance, which is mainly used for a one-pack coating material. A further aim of the invention is to achieve excellent storage stability and maintain excellent stain resistance even after storage by using the composition. The invention provides a resin composition for a one-pack coating material including: component (A) that is a polymer having a main chain substantially composed of an acrylic copolymer chain, and having, at a terminal of the main chain and/or in a side chain, at least one silicon group bonded to a hydrolyzable group; and component (B) that is a specific silicon compound; and if necessary, component (C) that is a compound having an amino group and/or a group hydrolyzable to an amino group; and component (D) that is another organic resin. The composition has excellent storage stability and maintains excellent stain resistance even after storage.

## Description

### TECHNICAL FIELD

The present invention relates to a resin composition for a one-pack coating material.

### BACKGROUND ART

Coating materials have been used in order to protect buildings or provide a design on buildings. Particularly, acrylic urethane resin coating materials, acrylic silicon resin coating materials, and fluororesin coating materials are widely recognized as highly weather-resistant coating materials. In order to protect the appearance of buildings or the like from contaminants specific to urban areas (e.g., exhaust gas), stain-resistant coating materials have been developed, and such coating materials are commercially available. For a stain-resistant coating material for exterior applications, a technique is known in which a specific silicon compound is used to provide a hydrophilic coat surface. In this technique, since catalysts including organometal compounds are used to produce sufficiently high performance of the coating material, the coating material is typically in two-pack form (see, for example, Patent Document 1).

Examples of other types of coating materials include one-pack coating materials. One-pack coating materials have been used because they are easy to handle when used for coating. Examples of coating materials of this type also include high performance coating materials such as acrylic urethane resin coating materials and acrylic silicon resin coating materials, which are designed to improve performance such as weather resistance, and such high performance coating materials are commercially available. Particularly, there is disclosed a coating material in which the resin has an unsaturated group introduced therein so that the coating material is cured by oxidation after being applied (see, for example, Patent Document 2).
Patent Document 1: JP-A H06-145453
Patent Document 2: JP-A 2000-119590

### SUMMARY OF THE INVENTION

However, one-pack coating materials having satisfactory stain resistance have not been commercially available yet. The reason for this can be explained as follows: it is difficult to achieve stain resistance when a silicon compound is used in an amount that makes it possible to ensure coatability; and it is difficult to avoid problems such as low storage stability when an organometal compound required to ensure the properties of the silicon compound is used.

In view of these problems, the present inventors completed the present invention. An object of the present invention is to provide a coating composition that has sufficient stain resistance although it contains a silicon compound in such an amount that the coatability of the coating material can be ensured. In addition, the coating composition has sufficient storage stability, and even after storage, the stain resistance of the coating composition is maintained at a satisfactory level, which is as high as immediately after the composition is prepared. A further object of the present invention is to provide an article coated with the coating composition. The present invention also achieves improved weather resistance. A still further object of the present invention is to provide a coating ingredient to be used for producing the coating composition.

The present inventors found that it is possible to produce a coating material stably having sufficient stain resistance by blending a composition having a predetermined content ratio of a specific hydrolyzable silyl group-containing organic polymer and a specific silicon compound with another organic resin even if the coating material is produced in one-pack form.

That is, the invention of the present application has the following aspects.
A resin composition for a one-pack coating material including: 100 parts by weight of component (A) ; 50 to 1000 parts by weight of component (B) ; 0 to 10 parts by weight of component C; and 150 parts by weight or more of component (D) (claim 1) .
Component (A) is a polymer having a main chain substantially composed of an acrylic copolymer chain, and having, at a terminal of the main chain and/or in a side chain, at least one silicon group bonded to a hydrolyzable group represented by formula (I).

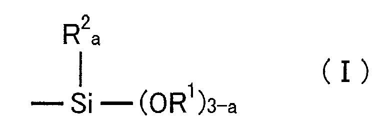

In the formula, R¹ represents a hydrogen atom or a C₁₋₁₀ alkyl group; R² represents a hydrogen atom or a monovalent hydrocarbon group selected from the group consisting of C₁₋₁₀ alkyl groups, C₆₋₂₅ aryl groups, and C₇₋₁₂ aralkyl groups; and "a" represents an integer of 0 to 2. Component (B) is a silicon compound represented by formula (II) and/or a partial hydrolysis-condensation product thereof.

(R³O)_{4-b}**-**Si-R⁴_{b} (II)

In the formula, R³ represents a monovalent hydrocarbon group selected from the group consisting of C₁₋₁₀ alkyl groups, C₆₋₁₀ aryl groups, and C₇₋₁₀ aralkyl groups; R⁴ represents a monovalent hydrocarbon group selected from the group consisting of C₁₋₁₀ alkyl groups, C₆₋₁₀ aryl groups, and C₇₋₁₀ aralkyl groups; and b represents 0 or 1. Component (C) is a compound having an amino group and/or a group hydrolyzable to an amino group. Component (D) is another organic resin.

The resin composition for a one-pack coating material according to claim 1, wherein the total weight of components (A), (B), and (C) is 0. 01 to 1. 0 times of the weight of component (D) (claim 2).

The resin composition for a one-pack coating material according to claim 1 or 2, wherein the component (D) is a solvent-type organic resin (claim 3).

The resin composition for a one-pack coating material according to any one of claims 1 to 3, wherein the component (D) is a pre-crosslinked organic resin, an organic resin curable by oxidation, or a thermosetting organic resin (claim 4).

The resin composition for a one-pack coating material according to any one of claims 1 to 4, wherein the component (A) and the component (B) are mixed, and then the mixture is added to the component (D) (claim 5).

The resin composition for a one-pack coating material according to any one of claims 1 to 5, wherein the component (C) is a compound having an alkoxysilyl group (claim 6).

A coated article which is coated with the resin composition for a one-pack coating material according to any one of claims 1 to 6 (claim 7).

The curable resin composition of the present invention can be produced at low cost through simple processes. Specifically, the present invention provides a resin composition for a coating material which has excellent stain resistance and is able to exhibit the performance sufficiently even after being stored, as well as has improved weather resistance. The resin composition may be used in the form of a one-pack coating material. The present invention also provides a stain resistance-imparting agent to be used for producing the composition for a coating material.

### BEST MODE FOR CARRYING OUT THE INVENTION

Hereinafter, the present invention is described in more detail based on embodiments.

### (Organic resin component A)

Resin "component (A) " usable in the present invention may be any resin as long as it has a hydrolyzable silyl group bonded to a carbon atom.

The silyl group bonded to a hydrolyzable group may be bonded to a terminal of the main chain of resin component (A) or to a side chain thereof. Alternatively, the silyl group may be bonded to a terminal of the main chain and to a side chain. Examples of methods for introducing the silyl group bonded to a hydrolyzable group include a method including copolymerizing a monomer containing the silyl group bonded to a hydrolyzable group with other monomers; a method including a reaction of a silicate compound; and a method including a reaction of a silicate compound with a hydroxyl group-containing copolymer. Among these, the method including copolymerizing a monomer containing the silyl group bonded to a hydrolyzable group with other monomers is simple.

Examples of the hydrolyzable group in the silyl group bonded to a hydrolyzable group include halogen groups and alkoxy groups. Alkoxy groups in formula (I) are useful because they allow easy reaction control.

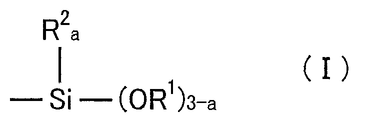

R¹ in formula (I) is a hydrogen atom or a C₁₋₁₀ alkyl group. Preferable examples thereof include C₁₋₄ alkyl groups such as a methyl group, an ethyl group, an n-propyl group, an i-propyl group, an n-butyl group, and an i-butyl group. When the alkyl group contains more than 10 carbon atoms, the hydrolyzable silyl group has low reactivity. R² in formula (I) is a hydrogen atom or a monovalent hydrocarbon group selected from the group consisting of C₁₋₁₀ alkyl groups, aryl groups such as a phenyl group, and aralkyl groups such as a benzyl group. Preferable examples of the C₁₋₁₀ alkyl groups include the C₁₋₄ alkyl groups described for R¹ above. The C₁₋₄ alkyl groups are preferable among these because they provide excellent curability to the composition of the present invention.

In (OR¹)₃₋ₐ in formula (I), (3-a) is set to 1 to 3; that is, "a" is set to 0 to 2. Preferably, "a" is set to 0 or 1. By setting "a" to 0 or 1, the composition of the present invention has better curability. Thus, the number of bonds of R² is preferably 0 or 1. If a plurality of OR¹ or a plurality of R² are present, these may be the same as or different from each other. Specific examples of the reactive silyl group bonded to a carbon atom represented by formula (I) include those contained in hydrolyzable silyl group-containing vinyl monomers to be copolymerized to form resin component (A), which are described below.

Hereinafter, one example of the method for producing resin component (A) is described.

Resin component (A) may be produced, for example, by copolymerizing hydrolyzable silyl group-containing vinyl monomers (component (a)) and other copolymerizable monomers (component (b)) by a solution polymerization method or the like with a radical polymerization initiator such as azobisisobutyronitrile.

Specific examples of the hydrolyzable silyl group-containing vinyl monomers (component (a)) include vinyltrimethoxysilane, vinylmethyldimethoxysilane, vinyltriethoxysilane, vinylmethyldiethoxysilane, vinyl tris(2-methoxyethoxy)silane, vinyltriisopropoxysilane, γ-(meth)acryloxypropyltrimethoxysilane, γ-(meth)acryloxypropylmethyldimethoxysilane, γ-(meth)acryloxypropyltriethoxysilane, γ-(meth)acryloxypropylmethyldiethoxysilane, γ-(meth)acryloxypropyltri-n-propoxysilane, γ-(meth)acryloxypropyltriisopropoxysilane, vinyltriacetoxysilane, and β-(meth)acryloxyethyltrimethoxysilane. Any of these hydrolyzable silyl group-containing vinyl monomers (component (a)) may be used alone, or two or more of these may be used in combination.

Considering favorable handleability, cost, and polymerization stability and in order to provide excellent curability to a composition to be produced, γ-(meth)acryloxypropyltrimethoxysilane, γ-(meth)acryloxypropylmethyldimethoxysilane, γ-(meth)acryloxypropyltriethoxysilane, γ-(meth)acryloxypropylmethyldiethoxysilane, and the like are particularly preferable.

The amount of the hydrolyzable silyl group-containing vinyl monomers (component (a)) to be used for the copolymerization is preferably 0.1 to 50 parts by weight per 100 parts by weight of the total amount of monomers. Less than 0.1 parts by weight of component (a) may not achieve sufficient stain resistance and not improve weather resistance. More than 50 parts by weight of component (a) tends to deteriorate storage stability.

Specific examples of other copolymerizable monomers (component (b)) include (meth)acrylic acid ester compounds including (meth)acrylate, ethyl (meth)acrylate, n-butyl (meth)acrylate, i-butyl (meth)acrylate, t-butyl (meth)acrylate, cyclohexyl (meth)acrylate, 2-ethylhexyl (meth)acrylate, stearyl (meth)acrylate, lauryl (meth)acrylate, benzyl (meth)acrylate, 3,3,5-trimethylcyclohexyl (meth)acrylate, glycidyl (meth)acrylate, isobornyl (meth) acrylate, acrylamides such as (meth) acrylamide, α-ethyl (meth)acrylamide, N-butoxymethyl (meth)acrylamide, N,N-dimethyl (meth)acrylamide, N-methyl (meth)acrylamide, and N-methylol (meth)acrylamide, (meth)acryloyl morpholine, phosphoric ester group-containing (meth)acrylic compounds including condensation products of hydroxyalkyl (meth)acrylates such as 2-hydroxyethyl (meth)acrylate and 2-hydroxypropyl (meth)acrylate with phosphoric acid or phosphoric esters, and (meth) acrylates having an urethane bond or a siloxane bond; aromatic hydrocarbon vinyl compounds such as styrene, α-methylstyrene, chlorostyrene, styrene sulfonic acid, 4-hydroxystyrene, and vinyltoluene; unsaturated carboxylic acids such as maleic acid, fumaric acid, itaconic acid, and (meth) acrylic acid, and salts thereof such as alkali metal salts, ammonium salts, and amine salts; acid anhydrides of unsaturated carboxylic acids such as maleic anhydride, and esters of unsaturated carboxylic acids such as diesters and half esters of the aforementioned acid anhydrides with alcohols or amines having a straight or branched C₁₋₂₀ chain; vinyl esters such as vinyl acetate and vinyl propionate, and allyl compounds such as diallyl phthalate; amino group-containing vinyl compounds such as vinylpyridine and aminoethyl vinyl ether; amide group-containing vinyl compounds such as itaconic acid diamide, crotonic acid amide, maleic acid diamide, fumaric acid diamide, and N-vinyl pyrrolidone; and other vinyl compounds such as (meth)acrylonitrile, 2-hydroxyethyl vinyl ether, methyl vinyl ether, cyclohexyl vinyl ether, vinyl chloride, vinylidene chloride, chloroprene, propylene, butadiene, isoprene, fluoroolefin maleimide, N-vinyl imidazole, and vinyl sulfonic acid.

Any of these other monomers (component (b)) may be used alone, or two or more of these may be used in combination.

Further, hydroxyl group-containing vinyl monomers and/or derivatives thereof (component (c)) may be copolymerized with the above components. If the hydroxyl group-containing vinyl monomers and/or derivatives thereof (component (c)) are copolymerized in an acrylic urethane resin coating material or the like, the coating material may provide a coat with improved appearance.

Specific examples of the hydroxyl group-containing vinyl monomers and/or derivatives thereof (component (c)) include 2-hydroxyethyl (meth)acrylate, 2-hydroxypropyl (meth)acrylate, 2-hydroxybutyl (meth)acrylate, 4-hydroxybutyl (meth)acrylate, glycerol mono(meth)acrylate, 2-hydroxyethyl vinyl ether, N-methylol (meth)acrylamide, 4-hydroxystyrene vinyltoluene, Aronix 5700 (available from Toagosei Chemical Industry Co., Ltd.), and 4-hydroxystyrene. Other specific examples thereof include: HE-10, HE-20, HP-1, and HP-2 (available from Nippon Shokubai Kagaku Kogyo Co. , Ltd. , acrylic ester oligomers each of which has a hydroxyl group at the terminal); polyalkylene glycol (meth) acrylate derivatives such as Blemmer PP series, Blemmer PE series, and Blemmer PEP series (available from NOF Corporation); ε-caprolactone-modified hydroxyalkyl vinyl copolymer compounds obtained by the reaction between hydroxyl group-containing compounds and ε-caprolactone, such as Placcel FM-1, FM-4 (both available from Daicel Chemical Industries, Ltd.), and TONE M-201 (available from Union Carbide Corporation); and polycarbonate-containing vinyl compounds such as HEAC-1 (available from Daicel Chemical Industries, Ltd.).

These hydroxyl group-containing vinyl monomers and/or derivatives thereof (component (c)) may be used alone, or two or more of these may be used in combination.

Resin component (A) produced as above preferably has a number average molecular weight of 3000 to 25000, particularly preferably 5000 to 20000. By setting the number average molecular weight in such a range, the composition of the present invention provides a coat having excellent physical properties such as excellent stain resistance and high durability. The molecular weight may be adjusted using chain transfer agents such as n-dodecyl mercaptan, γ-mercaptopropyltrimethoxysilane, and γ-mercaptopropyltriethoxysilane, if necessary.

The resin component (A) having "a main chain substantially composed of an acrylic copolymer chain" means that 50% or more, preferably 70% or more, of units of the main chain of resin component (A) are (meth) acrylic monomer units. The term " (meth) acrylic" as used herein is intended to indicate both of "acrylic" and "methacrylic".

### (Silicon compound)

In the present invention, in order to improve the stain resistance of coats to be formed from the composition of the present invention, 50 to 1000 parts by weight of a silicon compound represented by formula (II) and/or a partial hydrolysis-condensation product (component (B), hereinafter, referred to as the organosilicate compound (component (B))) can be used with resin component (A).

(R³O)_{4-b}-Si-R⁴_{b} (II)

In the formula, R³ represents a monovalent hydrocarbon group selected from the group consisting of C₁₋₁₀ alkyl groups, C₆₋₁₀ aryl groups, and C₇₋₁₀ aralkyl groups; R⁴ represents a monovalent hydrocarbon group selected from the group consisting of C₁₋₁₀ alkyl groups, C₆₋₁₀ aryl groups, and C₇₋₁₀ aralkyl groups; and b is 0 or 1.

Specific examples of the organosilicate compound (component (B)) include tetramethoxysilane, tetraethoxysilane, tetra-n-propoxysilane, tetra-i-propoxysilane, tetra-n-butoxysilane, tetra-i-butoxysilane, tetra-t-butoxysilane, and partial hydrolysis-condensation products thereof. Particularly, methyl silicate 51, ethyl silicate 45, ethyl silicate 40, and ethyl silicate 48 (all available from Colcoat Co. , Ltd.), and silicate 45 and silicate 40 (both available from Tama Chemicals Co., Ltd.) are preferred. By using them, coats to be formed have excellent stain resistance. Any of these compounds may be used alone, or two or more of these may be used in combination.

Organosilicates containing different alkoxysilyl groups in the same molecule may also be used. Examples thereof include methylethyl silicate, methylpropyl silicate, methylbutyl silicate, ethylpropyl silicate, and propylbutyl silicate. The ratio of these substituents in the molecule may be optionally adjusted in the range of 0 to 100%. As described above, partial hydrolysis-condensation products of these silicates may be used. In this case, the condensation degree is preferably about 1 to 20. The condensation degree is more preferably 3 to 15.

The amount of component (B) to be used is 50 to 1000 parts by weight per 100 parts by weight of component (A), preferably 75 to 500 parts by weight, and more preferably 100 to 400 parts by weight. Use of more than 1000 parts of the organosilicate compound (component (B)) is not preferable because coats to be formed from the coating composition may have poor appearance such as cloudy appearance or insufficiently glossy appearance.

### (Amino group-containing compound)

In the present invention, in order to further improve the stain resistance of the curable composition for a one-pack coating material to be produced, a compound having an amino group and/or a group hydrolyzable to an amino group (component (C), hereinafter, referred to as the amino group-containing compound (component (C))) can be used in an amount of 0 to 10 parts by weight.

The amino group-containing compound (component (C)) is not particularly limited, and is preferably a tertiary amine compound, a morpholine compound, or an aminosilane compound, each of which has one nitrogen atom in one molecule, because these compounds excellently improve the stain resistance.

Specific examples of the tertiary amine compound include trialkylamines such as triethylamine and tripropylamine; and alkanolamines such as methyldiethanolamine, triethanolamine, dimethylethanolamine, and dimethylpropanolamine.

Specific examples of the morpholine compound include morpholine, N-methylmorpholine, and N-ethylmorpholine.

Specific examples of the aminosilane compound include γ-aminopropyltrimethoxysilane, γ-aminopropyltriethoxysilane, 2-aminoethylaminopropyltrimethoxysilane, 2-aminoethylaminopropyltriethoxysilane, 3-phenylaminopropyltrimethoxysilane, and 3-phenylaminopropyltriethoxysilane. Particularly, aminosilane compounds having at least one alkoxysilyl group with at least two carbon atoms are preferable, and γ-aminopropyltriethoxysilane, 3-phenylaminopropyltriethoxysilane, and the like are particularly preferable because these compounds make it possible for the resin composition of the present invention to have excellent stain resistance after storage.

In order to allow the resin composition of the present invention to have excellent stain resistance after storage, compounds having a ketimino group capable of being hydrolyzed to reproduce an amino group are further preferable. The ketimino group is an imino group induced from ketone, and can be hydrolyzed to remove its ketone compound, resulting in reproduction of an amino group. Specific examples thereof include 2,5,8-triaza-1,8-nonadiene, 3,11-dimethyl-4,7,10-triaza-3,10-tridecadiene, and 2,10-dimethyl-3,6,9-triaza-2,9-undecadien. ADEKA HARDENER EH-235 series (available from ADEKA Corporation) and the like are preferable because they are easily available. In addition, ketiminosilanes such as KBE-9103 (available from Shin-Etsu Chemical Co., Ltd.), Sila-Ace S340 (available from Chisso Corporation), and Z-6860 (available from Dow Corning Toray Co., Ltd.) are preferable because these compounds make it possible for the composition of the present invention to have excellent stain resistance after storage.

The amount of component (C) to be used is 0 to 10 parts by weight per 100 parts by weight of component (A), preferably 0 to 5 parts by weight, and more preferably 0 to 3 parts by weight. Use of more than 10 parts of the amino group-containing compound (component (C)) is not preferable because more than 10 parts of component (C) may deteriorate the storage stability and fail to provide sufficient stain resistance.

### (Organic resin)

Organic resin (D) used in the present invention is not particularly limited as long as it is a solvent-type organic resin for a coating material, which provides favorable stability and appearance to the composition. Resins for a one-pack coating material are preferable because of their better handleability.

A coating material may be produced by mixing components (A), (B) and (C) with a resin for a one-pack coating material, and then blending various additives such as dehydrating agents and pigments therewith. Alternatively, a coating material may be produced by blending components (A), (B) and (C) with a pre-prepared coating material such as a white enamel coating material. The latter process in which a coating material is produced by blending components (A), (B) and (C) with a pre-prepared coating material such as a white enamel coating material is more preferable in order to improve the storage stability and to facilitate production.

Examples of the one-pack coating material used in this case include oil modified one-pack coating materials, vinyl chloride lacquer coating materials, acrylic lacquer coating materials, moisture curing one-pack coating materials, and thermosetting one-pack coating materials. Particularly, one-pack coating materials curable by oxidation in which the resin has an unsaturated group introduced therein so that the coating material is cured by oxidation after being applied, moisture curing one-pack coating materials, and thermosetting one-pack coating materials are preferable because of their excellent weather resistance.

A large number of such one-pack coating materials are commercially available, and any of these may be used to produce the composition for a coating material of the present invention. Specific examples of the commercially available one-pack coating materials include one-pack fine urethane and fine silicone cera (both available from Nippon Paint Co., Ltd.); ALES-ECO RETAN and ALES-ECO SILICON (both available from Kansai Paint Co., Ltd.); and one-pack mild urethane, and one-pack mild silicon (both available from SK KAKEN Co.,Ltd.).

### (Blending method)

The total weight of components (A), (B) and (C) is 0.01 to 1.0 times, preferably 0.02 to 0. 7 times, and more preferably 0.03 to 0.5 times, of the weight of component (D) . Use of the components in an amount of less than 0.01 times of the weight of component (D) may not provide desired stain resistance and weather resistance. Use of the components in an amount of more than 1.0 time of the weight of component (D) may provide insufficient drying property, curability, and water resistance.

The blending order of components (A) to (D) is not particularly limited, and these may be added in any order. Since the effects of the present invention are produced, for example, depending on the compatibility between the components though the total amount of components (A) to (C) is much smaller than that of component (D), it is preferable that components (A) and (B) are mixed in advance and then the mixture is added to component (D). In this case, the blending order of component (C) is not particularly limited. In order to further improve the storage stability, component (C) is preferably added to component (D) or blended to a mixture of components (A), (B) and (D) which is mixed in advance.

Components (A) and (B) may be mixed and stirred just at ambient temperature, or stirred at a temperature of about 150°C or lower. The condensation reaction between part of the alkoxysilyl groups of component (A) and part of the alkoxysilyl groups of component (B) may proceed to form a complex, resulting in improvement in the weather resistance. Stirring these components at a temperature of higher than 150°C is not preferable because the reaction is difficult to control and the stability is impaired under this condition.

### (Dehydrating agent)

In the resin composition for a one-pack coating material of the present invention, since the hydrolyzable silyl group-containing vinyl monomers (component (a)) in component (A) and the silicon compound (component (B)) are reactive with moisture, dehydrating agents may be further blended so as to improve the storage stability of the composition.

Examples of the dehydrating agents include orthocarboxylates such as alkyl orthoformates including methyl orthoformate, ethyl orthoformate, and butyl orthoformate; alkyl orthoacetates including methyl orthoacetate, ethyl orthoacetate, and butyl orthoacetate; and alkyl orthoborates including methyl orthoborate, ethyl orthoborate, and butyl orthoborate. Other examples thereof include highly active silane compounds such as tetramethoxysilane, tetraethoxysilane, and methyltrimethoxysilane.

Additives that are usually used in coating materials may be optionally added to the curable resin composition of the present invention. Examples of the additives include additives such as diluents, ultraviolet absorbents, light stabilizers, antisagging agents, leveling agents, dispersants, and anti-flooding agents; silane coupling agents other than aminosilane; celluloses such as cellulose nitrate and cellulose acetate butyrate; and resins such as epoxy resin, melamine resin, vinyl chloride resin, fluororesin, chlorinated polypropylene, chlorinated rubber, polyvinyl butyral, and polysiloxane.

Catalysts such as organometal compounds, acids, and bases may be added to the curable resin composition of the present invention. However, use of an excessive amount of catalyst deteriorates the storage stability. The amount of catalyst to be used is preferably 0 to 1 parts by weight per 100 parts by weight of component (A), more preferably 0 to 0.1 parts by weight, and further preferably 0 to 0.01 parts by weight. It is particularly preferable that catalysts are not used.

The resin composition for a one-pack coating material of the present invention is applied to an article to be coated by a common method, for example, by immersion, spraying, or using a brush or a spray, and then allowed to stand at ambient temperature or baked at a temperature of 30°C or higher for curing.

### EXAMPLES

The resin composition for a one-pack coating material of the present invention is described in more detail below by way of examples. However, the present invention is not limited only to the examples.

### (Method for preparing polymer "component (A)": Production Examples A-1 to A-6)

Component (ii) shown in Table 1 was charged in a reaction vessel provided with a stirrer, a thermometer, a reflux condenser, a nitrogen gas introducing pipe, and a dropping funnel. The reaction vessel was heated to 110°C while nitrogen gas is introduced. Subsequently, component (i) (a mixture of materials shown in Table 1) was added dropwise through the dropping funnel over 5 hours at a constant speed. Next, component (iii) (a mixed solution containing materials shown in Table 1) was added dropwise over 1 hour at a constant speed. Thereafter, stirring of the mixture continued at 110°C for 2 hours, and then cooled to room temperature. Finally, component (iv) shown in Table 1 was added to the resulting mixture, and the mixture was stirred, whereby polymer (A) is synthesized.

The solid content concentration and the number average molecular weight determined by GPC of thus obtained polymers (A-1 to A-6) are shown in Table 1.

**[Table 1]**

| Components | | A-1 | A-2 | A-3 | A-4 | A-5 | A-6 |
|---|---|---|---|---|---|---|---|
| (i) | Isobutyl methacrylate | 87.0 | 75.7 | 86.8 | 38.0 | 20.0 | 70.0 |
| | Butyl methacrylate | | | | | 60.0 | |
| | Stearyl methacrylate | 5.5 | 5.0 | | 8.0 | | 5.0 |
| | 2-Ethylhexyl acrylate | 5.5 | 5.3 | 5.8 | 12.0 | | 10.0 |
| | 2-Ethylhexyl methacrylate | | | 5.4 | | | 5.0 |
| | 2-Hydroxyethyl methacrylate | | 7.0 | | | | 10 |
| | Methyl methacrylate | | | | 40.0 | 12.0 | |
| | γ-Methacryloxypropyltrimethoxysilane | 2.0 | 7.0 | | 2.0 | 8.0 | |
| | γ-Methacryloxypropyltriethoxysilane | | | 2.0 | | | |
| | 2,2'-Azobis(2-methylbutyronitrile) | 0.9 | 1.8 | 0.9 | 0.9 | 0.9 | 0.9 |
| | Solvesso 100 | | 4.3 | 4.3 | 4.3 | | |
| | Pegasol AN45 | 25.7 | 10.7 | 10.7 | 10.7 | 15.0 | 25.7 |
| (ii) | Solvesso 100 | | 14.5 | 14.5 | 14.5 | | |
| | Pegasol AN45 | 48.2 | 35.5 | 35.5 | 35.5 | 48.2 | 48.2 |
| (iii) | 2,2'-Azobis(2-methylbutyronitrile) | 0.1 | 0.2 | 0.1 | 0.1 | 0.2 | 0.1 |
| | Solvesso 100 | | 2.9 | 2.9 | 2.9 | | |
| | Pegasol AN45 | 2.8 | 7.2 | 7.2 | 7.2 | 10.1 | 2.8 |
| (iv) | Methyl orthoacetate | | 1.0 | | | 1.0 | |
| | Number average molecular weight | 15000 | 10000 | 15000 | 15000 | 15000 | 15000 |
| | Solid content concentration (%) | 55.8 | 56.4 | 56.2 | 56.1 | 56.6 | 54.9 |

(In the table, the unit of the amounts of components (i) to (iv) is part by weight)
Solvesso 100: organic solvent (available from Exxon Mobil Corporation)
Pegasol AN45 Organic solvent (available from Exxon Mobil Corporation
(Method for preparing composition containing polymer "component (A)" and silicon compound "component (B)": Production Examples AB-1 to AB-9)
Component (B) shown in Table 2 was added to the polymer (component (A)) prepared above, and the mixture was stirred for 1 hour at the temperature shown in the table. The resulting mixture was diluted with a polymerization solvent so that the solid content concentration became 50%. Thus, resin compositions (AB-1 to AB-9) were obtained.

The ratio of component (A), calculated as the solids contained, to component (B) in the obtained resin compositions (AB-1 to AB-9) is shown in Table 2.

**[Table 2]**

| Components | | AB-1 | AB-2 | AB-3 | AB-4 | AB-5 | AB-6 | AB-7 | AB-8 | AB-9 |
|---|---|---|---|---|---|---|---|---|---|---|
| (A) | A-1 | 100.0 | 100.0 | 100.0 | | | | | | |
| | A-2 | | | | 100.0 | | | | | |
| | A-3 | | | | | 100.0 | | | | |
| | A-4 | | | | | | 100.0 | | | |
| | A-5 | | | | | | | 100.0 | | |
| | A-6 | | | | | | | | 100.0 | |
| (B) | Silicate 45 | | | 100.0 | | | | | | |
| | ESi 48 | 400.0 | 50.0 | | 200.0 | 100.0 | 200.0 | 100.0 | 200.0 | 100.0 |
| Mixing temperature | | 65.0 | 50.0 | 50.0 | 30.0 | 50.0 | 30.0 | 50.0 | 50.0 - | |
| Ratio in 100 parts by weight | Component (A) | 13.0 | 36.6 | 29.1 | 20.6 | 29.1 | 20.6 | 29.1 | 20.6 | 0.0 |
| | Component (B) | 51.9 | 18.3 | 29.1 | 41.1 | 29.1 | 41.1 | 29.1 | 41.1 | 100.0 |

(In the table, the unit of the amount of component (B) is part by weight)
Silicate 45: partial hydrolysis-condensation product of ethyl silicate (available from Tama Chemicals Co., Ltd.)
Esi 48: partial hydrolysis-condensation product of ethyl silicate (available from Colcoat Co., Ltd.)
(Production method for composition for one-pack coating material)
The components shown in Table 3 were added to component (D), and the mixture was stirred with a stirrer for 3 minutes at 1000 rpm to form a one-pack coating material.

### (Evaluation of physical properties)

Substrates were prepared by sequentially applying, to aluminum plates, ESCO (epoxy coating material available from Kansai Paint Co., Ltd.) and one-pack fine urethane at an interval of one day.

Test plates were prepared by applying the one-pack coating materials shown in Table 3 to the substrates with an air spray to form a coat of about 40 µm thickness.

The one-pack coating materials were hermetically stored at 50°C for one month, and then applied with an air spay in the same manner to prepare test plates.

### <Water contact angle>

The test plates were left on an outdoor rain exposure stand for one month, and the degree of staining of the test plates was evaluated by visual observation. The water contact angle of coats, which is an indicator of the stain resistance, was measured with a contact angle measuring device (CA-S150, available from Kyowa Interface Science Co., Ltd.). Lower contact angles indicate higher stain resistance.

### <Visual observation>

The appearance of the test plates was evaluated according to the following criteria.

### Evaluation by visual observation

++: almost no trace of rain was observed

+ : faint traces of rain were observed but removed by easy rinsing with water.

± : traces of rain were observed, and faint traces remained after rinsing with water.

- :traces of rain were observed and hardly removed by rinsing with water.

### <Weather resistance>

The test plates prepared as described above were assessed with a sunshine weatherometer to evaluate accelerated weather resistance.

Table 3 shows the 60° gloss retention (%) determined after a 2000-hour test. Higher values indicate higher weather resistance.

**[Table 3]**

| Components | | Example 1 | Example 2 | Example 3 | Example 4 | Example 5 | Example | 6 Example | 71Example 8 |
|---|---|---|---|---|---|---|---|---|---|
| (AB) | AB-1 | 10 | 10 | | | | | | |
| | AB-2 | | | 15 | | | | | |
| | AB-3 3 | | | | 15 | | | | |
| | AB-4 | | | | | 7 | | | |
| | AB-5 | | | | | | 10 | | |
| | AB-6 | | | | | | | 10 | |
| | AB-7 | | | | | | | | 10 |
| | AB-8 | | | | | | | | |
| | AB-9 | | | | | | | | |
| (C) | KBE-9103 | | | | | | | | |
| | γ-Aminopropyl triethoxysilane | | | | | | | | |
| | Triethanolamine | | | | | | | | |
| (D) | One-pack fine urethane | 100 | | 100 | 100 | 100 | 100 | | 100 |
| | Fine silicone cera | | 100 | | | | | 100 | |
| Dehydrating agent | Methyl orthoacetate | | | 0.9 | 0.9 | 0.9 | 0.9 | 0.9 | |
| Physical properties | Water contact angle (°) | 45 | 52 | 58 | 64 | 55 | 52 | 55 | 53 |
| | Visual observation | ++ | ++ | + | + | ++ | ++ | ++ | ++ |
| | Accelerated weather resistance | 90 | 93 | 81 | 89 | 85 | 81 | 96 | 96 |
| | Water contact angle (°) after storage | 50 | 59 | 63 | 60 | 63 | 61 | 63 | 55 |
| | Visual observation | ++ | ++ | + | + | | | + ++ + ++ | |

**[Table 4]**

| Components | | Example 9 | Example 10 | Example 11 | Example 1 | Comparative Example 2 | Comparative Example 3 |
|---|---|---|---|---|---|---|---|
| (AB) | AB-1 | | | | | | |
| | AB-2 | | | | | | |
| | AB-3 | | | | | | |
| | AB-4 | | | | | | |
| | AB-5 | 10 | 10 | 10 | | | |
| | AB-6 | | | | | | |
| | AB-7 | | | | | | |
| | AB-8 | | | | 10 | | |
| | AB-9 | | | | | 10 | 10 |
| (C) | KBE-9103 | 0.3 | | | | | 0.3 |
| | γ-Aminopropyl triethoxysilane | | 0.15 | | | | |
| | Triethanolamine | | | 0.3 | | | |
| (D) | One-pack fine urethane | 100 | 100 | 100 | 100 | 100 | 100 |
| | Fine silicone cera | | | | | | |
| Dehydrating agent | Methyl orthoacetate | 0.9 | 0.9 | 0.9 | | | |
| Physical properties | Water contact angle (°) | 44 | 45 | 48 | 68 | 75 | 65 |
| | Visual observation | ++ | ++ | ++ | + | ± | + |
| | Accelerated weather resistance | 85 | 85 | 81 | 70 | 72 | 70 |
| | Water contact angle (°) after storage | 47 | 52 | 65 | 78 | 81 | 83 |
| | Visual observation | ++ | ++ | + | ± | - | - |

(The unit of the amounts of the components in the table is part by weight)
KBE-9103: ketiminosilane available from Shin-Etsu Chemical Co., Ltd.
One-pack fine urethane: one-pack urethane coating material (white), available from Nippon Paint Co., Ltd.
Fine silicone cera: one-pack silicon coating material (white), available from Nippon Paint Co., Ltd.
Each of the compositions of Examples 1 to 11 (the resin compositions for a one-pack coating material according to the present invention) had high stain resistance and storage stability. The composition of Comparative Example 1 in which the polymer without a hydrolyzable group-containing silicon group was used, the composition of Comparative Example 2 in which components (A) and (C) were not added, and the composition of Comparative Example 3 in which component (A) was not added each had poor stain resistance, storage stability and accelerated weather resistance.

As described above, the resin composition for a one-pack coating material of the present invention can be produced at low cost through simple processes. Specifically, the present invention provides a resin composition for a coating material which has excellent stain resistance and is able to exhibit the performance sufficiently even after being stored, as well as has improved weather resistance. The resin composition may be used in the form of a one-pack coating material. The present invention also provides a stain resistance-imparting agent to be used for producing the composition for a coating material.

### Industrial applicability

The curable resin composition of the present invention is suitably used for coating buildings, household electrical appliances and industrial instruments formed with, for example, a metal, ceramics, glass, cement, ceramic base material, plastic, wood, paper, or fiber.

## Claims

1. A resin composition for a one-pack coating material comprising: 100 parts by weight of component (A); 50 to 1000 parts by weight of component (B); 0 to 10 parts by weight of component (C); and 150 parts by weight or more of component (D),
wherein the component (A) is a polymer having a main chain substantially composed of an acrylic copolymer chain, and having, at a terminal of the main chain and/or in a side chain, at least one silicon group bonded to a hydrolyzable group represented by formula (I): 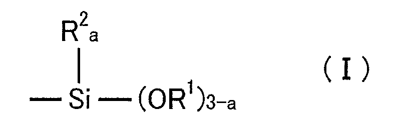 wherein R¹ represents a hydrogen atom or a C₁₋₁₀ alkyl group; R² represents a hydrogen atom or a monovalent hydrocarbon group selected from the group consisting of C₁₋₁₀ alkyl groups, C₆₋₂₅ aryl groups, and C₇₋₁₂ aralkyl groups; and "a" represents an integer of 0 to 2,
the component (B) is a silicon compound represented by formula (II):
(R³O)_{4-b}-Si-R⁴_{b} (II)
wherein R³ represents a monovalent hydrocarbon group selected from the group consisting of C₁₋₁₀ alkyl groups, C₆₋₁₀ aryl groups, and C₇₋₁₀ aralkyl groups; R⁴ represents a monovalent hydrocarbon group selected from the group consisting of C₁₋₁₀ alkyl groups, C₆₋₁₀ aryl groups, and C₇₋₁₀ aralkyl groups; and b represents 0 or 1,
and/or a partial hydrolysis-condensation product thereof,
the component (C) is a compound having an amino group and/or a group hydrolyzable to an amino group, and
the component (D) is another organic resin.

2. The resin composition for a one-pack coating material according to claim 1,
wherein the total weight of components (A), (B), and (C) is 0.01 to 1.0 times of the weight of component (D).

3. The resin composition for a one-pack coating material according to claim 1 or 2,
wherein the component (D) is a solvent-type organic resin.

4. The resin composition for a one-pack coating material according to any one of claims 1 to 3,
wherein the component (D) is a pre-crosslinked organic resin, an organic resin curable by oxidation, or a thermosetting organic resin.

5. The resin composition for a one-pack coating material according to any one of claims 1 to 4,
wherein the component (A) and the component (B) are mixed, and then the mixture is added to the component (D).

6. The resin composition for a one-pack coating material according to any one of claims 1 to 5,
wherein the component (C) is a compound having an alkoxysilyl group.

7. A coated article which is coated with the resin compositions for a one-pack coating material according to any one of claims 1 to 6.
